## Europäisches Patentamt
## European Patent Office
## Office européen des brevets

(19)

(11) Numéro de publication: **0 049 670**
**B1**

(12)

# FASCICULE DE BREVET EUROPEEN

(45) Date de publication du fascicule du brevet:
14.03.84

(51) Int. Cl.³: **H 04 L 5/16,** H 04 B 3/32,
H 04 Q 11/04

(21) Numéro de dépôt: 81401548.3

(22) Date de dépôt: 06.10.81

(54) Dispositif pour minimiser la télédiaphonie entre des lignes de transmission numérique à l'alternat.

(30) Priorité: 08.10.80 FR 8021483

(43) Date de publication de la demande:
14.04.82 Bulletin 82/15

(45) Mention de la délivrance du brevet:
14.03.84 Bulletin 84/11

(84) Etats contractants désignés:
BE CH DE GB IT LI SE

(56) Documents cités:
DE - A - 2 251 608

NTG FACHBERICHTE, vol. 73, 1980, ISSLS 80, The
International Symposium on Subscriber Loops and
Services, September 15-19, 1980, Munich, VDE-Verlag
GmbH BERLIN (DE) K. TANAKA et al.: "Studies on
digitalization of subscriber loop transmission system",
pages 86-90

(73) Titulaire: **Pays, Gérard, Chemin de Toul-ar-Lann,**
**F-22700 Perros-Guirec (FR)**

(72) Inventeur: **Pays, Gérard, Chemin de Toul-ar-Lann,**
**F-22700 Perros-Guirec (FR)**

(74) Mandataire: **Cabinet Martinet, 62, rue des Mathurins,**
**F-75008 Paris (FR)**

# 0 049 670

## Dispositif pour minimiser la telediaphonie entre des lignes de transmission numerique a l'alternat

La présente invention concerne un dispositif pour minimiser la télédiaphonie entre des lignes de transmission numérique à l'alternat possédant chacune un tronçon de ligne qui est localisé entre une extrémité émettant un signal numérique et un point de regroupement des lignes et qui produit une atténuation inférieure à une atténuation maximale.

L'invention s'applique particulieèrement à une artère de transmission, tel qu'un câble de lignes d'abonnés numérisées qui fonctionnent en mode de transmission à l'alternat. Outre la dépendance des contraintes relatives à l'affaiblissement de la ligne, afin que les récepteurs puissent détecter et régénérer le signal reçu, et corollairement des temps de propagation dans les lignes, la portée des lignes d'abonné actuelles est également influencée par les phénomènes de diaphonie. L'une des composantes de la diaphonie, à savoir la paradiaphonie, est réduite par le fait que l'une des stations terminales, telle que le central téléphonique de rattachement desservant les lignes d'abonné, synchronise les émissions des paquets vers les postes d'abonné. Cependant, l'autre composante relative à la télédiaphonie est présente et produit une perturbation notable qui peut être une source d'erreurs dans la régénération du signal à la réception.

Des moyens pour réduire l'effet de télédiaphonie dans une ligne numérique à l'alternat incluse dans une artère sont décrits dans l'article de K. TANAKA et al. paru dans NTG FACHBERICHTE, Pages 86—90, Vol. 73, 1980, ISSLS80 »THE INTERNATIONAL SYMPOSIUM ON SUBSCRIBER LOOPS AND SERVICES«, 15—19 Septembre 1980, Munich, VDE-Verlag GmbH, Berlin (DE). Ces moyens consistent à insérer dans la voie d'émission de l'équipement terminal de la ligne un amplificateur égaliseur dont le gain est commandé par le circuit de commande de gain automatique de l'amplificateur égaliseur de la voie de réception de l'équipement terminal. Les voies d'émission et de réception comprennent ainsi chacune un amplificateur égaliseur.

La présente invention a pour but de supprimer pratiquement les effets de télédiaphonie entre deux ou plusieurs lignes de transmission réunies dans une même artère ou câble en utilisant des moyens de filtrage déjà introduits dans le canal de réception d'une station terminale ou intermédiaire à l'alternat.

A cette fin, un dispositiv pour minimiser la télédiaphonie entre des lignes de transmission numérique introduit dans une station terminale ou intermédiaire à transmission numérique à l'alternat reliée à une extrémité du tronçon d'une ligne dont l'autre extrémité est un point de regroupement desdites lignes et qui produit une atténuation inférieure à une atténuation maximale, ledit dispositif comprenant dans la voie de réception de la station des moyens d'égalisation comportant, en outre, un filtre ayant un gain de transfert pratiquement égal à la différence de l'atténuation du tronçon et de l'atténuation maximale est caractérisé en ce qu'il comprend des moyens de commutation pour introduire en série ledit filtre dans la voie d'émission de la station pendant chaque phase d'émission du cycle de transmission à l'alternat dans la station.

En d'autres termes, l'invention repose sur un asservissement du signal émis, par exemple, côte poste d'abonné pour une transmission à l'alternat, afin d'optimiser à la réception, côte central, le rapport signal à bruit. Cette optimisation est obtenue en homogénéisant les niveaux relatifs en fréquence des signaux sur les lignes de l'artère afin que les histogrammes des niveaux relatifs représentés par les densités spectrales de puissance des signaux soient pratiquement identiques au moins le long des tronçons de ligne adjacents enfermés dans l'artère.

L'insertion dans la voie d'émission du filtre variable contenu dans les moyens d'égalisation de la voie de réception ne confère avantageusement que des modifications succinctes des stations terminales ou intermédiaires actuelles.

La réutilisation de ce filtre dans la voie d'émission est obtenue par des moyens de commutation qui sont commandés en synchronisme avec l'alternance des connexions entre les voies d'émission et de réception du dispositif et la ligne de transmission et qui sont, de manière générale, introduits en arrière de la borne d'entrée et devant la borne de sortie du filtre variable ou des moyens d'égalisation. En phase d'émission, le filtre est inséré en série dans la voie d'émission tandis que la voie de réception est ouverte. En phase de réception, le filtre est inséré dans la voie de réception, comme cela est constant selon l'art antérieur, tandis que la voie d'émission est ouverte.

La mise en œuvre de l'invention n'impose pas de composants précis ou appariés, puisque les moyens de régulation de gain sont uniques, asservis par une boucle de réaction. La réutilisation du filtre variable dans la voie d'émission ne nécessite pas de réglage et n'altère pas le délai de l'inversion des transmissions, puisque les moyens de commutations sont synchrones et commandés par les moyens d'alternance actuels.

Accessoirement, la régulation du niveau relatif du signal émis procure avantageusement une diminution de l'effet de diaphonie perturbateur des lignes de transmission numérique sur d'autres lignes de la même artère qui sont exploitées selon un autre mode de transmission.

D'autres avantages de la présente invention apparaîtront plus clairement à la lecture de la description qui suit de plusieurs exemples de réalisation et des dessins annexés correspondants, dans lesquels:

— la Fig. 1 montre schématiquement une atère de transmission numérique entre un central téléphonique et des postes téléphoniques;

— les Fig. 2A et 2B sont des diagrammes temporels montrant l'échange connu de paquets de données entre une station maître et deux station esclaves qui sont respectivement desservies par une ligne courte et une ligne de portée maximale;

— la Fig. 3 indique les différentes densités spectrales de puissance le long de tronçons de lignes numériques regroupées dans une artère et dotées à l'une de leurs extrémités d'émission du dispositif selon l'invention;

— la Fig. 4 est un bloc-diagramme des organes relatifs à l'amplification et à l'égalisation d'un post d'abonné numérique selon l'art antérieur, fonctionnant à l'alternat;

— les Fig. 5 et 6 montrent deux réalisations pratiques connues des filtres du circuit d'égalisation et d'amplification du poste; et

— les Fig. 7 et 8 sont des blocs-diagrammes relatifs à la Fig. 4, montrant les modifications à apporter selon l'invention.

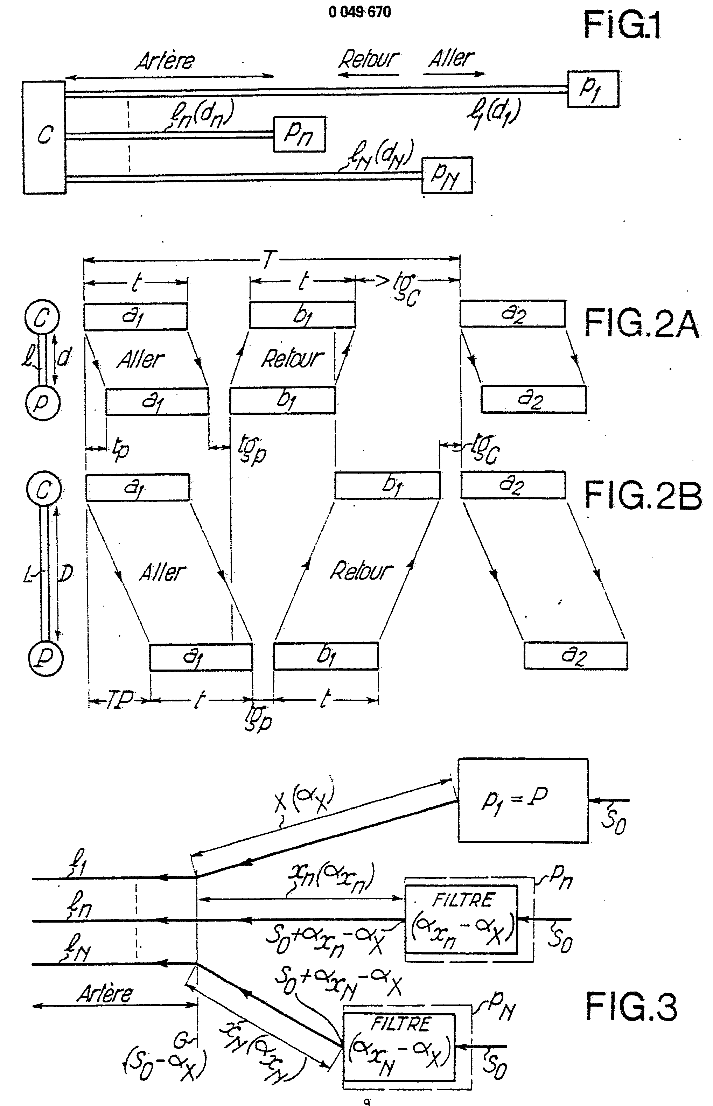

La Fig. 1 représente une artère dont le mode de transmission est à l'alternat, également appelé mode semi-duplex. Le support physique de cette artère est un câble qui renferme N lignes téléphoniques à deux fils $l_1$ à $l_N$. Toutes ces lignes ont une extrémité commune rattachée à une même station terminale C. Leurs autres extrémités sont reliées à des stations éloignées $p_1$ à $p_N$, respectivement à une distance $d_1$ à $d_N$. En pratique, une telle artère est, par exemple, un câble téléphonique d'abonnés desservant à partir d'un central téléphonique de rattachement C un nombre N de postes téléphoniques $p_1$ à $p_N$.

On se réfère maintenant aux Fig. 2A et 2B pour rappeler brièvement le principe de transmission numérique à l'alternat.

Le central téléphonique C est considéré comme une station »maître«, parce qu'elle impose la durée du cycle de transmission à l'alternat T entre deux stations C et p. La durée d'un cycle de transmission T est définie entre l'instant de début d'émission d'un paquet $a_1$ selon la direction de transmission dite aller, de la station maître C vers une station dite »esclave« p, et l'instant de début d'émission du paquet suivant $a_2$ à partir de la station maître C, comme montré à la Fig. 2A. La transmission à l'alternat exige que, pendant le cycle de transmission T, un paquet $b_1$ émis selon la direction de transmission dite »retour«, de la station esclave p vers la station maître C, ait été reçu par la station maître avant l'émission du second paquet suivant $a_2$. On suppose dans la suite que tous les paquets ont un même nombre de digits et donc ont une même durée égale à t. On désigne par tp le temps de propagation dans une ligne l de longueur d. Dans ce cas, on a, quelle que soit la longueur d, donc tp:

$$T \geq 2 (t + tp + tg_C + tg_p).$$

$tg_C$ et $tg_p$ sont les temps de garde, pratiquement égaux, nécessaires à l'inversion des directions de transmission dans les stations »maître et esclave«, C et p. Ainsi, comme il est connu, pour un débit numérique donné dans les stations, le débit en ligne doit être égal à au moins deux fois le débit dans les stations.

La Fig. 2A représente le diagramme temporel relatif à une ligne téléphonique l de l'artère dont la longueur d est inférieure à la portée o longueur maximale D d'une telle ligne au-delà de laquelle la ligne serait trop longue pour que le signal reçu puisse être détecté, amplifié et régénéré convenablement. Dans ce cas, l'intervalle de temps entre la fin de la réception d'un paquet $b_1$ et le début de l'émission d'un paquet suivant $a_2$ dans la station maître C est supérieur au temps de garde $tg_C$.

La Fig. 2B représente le diagramme temporel relativ à une ligne téléphonique désignée par L, dont a longueur est égale à la portée maximale D correspondant au temps de propagation maximum TP. La fin de la réception d'un paquet $b_1$ dans la station maître C est alors suivi d'un intervalle de temps égal au temps de garde $tg_C$ avant l'émission du paquet suivant $a_2$.

Comme il est connu, les émissions des paquets a selon la direction aller par la station maître C sont synchrones et en phase pour toutes les ligne $l_1$ à $l_N$ de l'artère. Etant donné que chaque station esclave émet un paquet b après un temps de garde $tg_p$ en réponse à la réception d'un paquet a, on voit que les émissions des paquets b par les stations esclaves $p_1$ à $p_N$ ne sont pas synchrones, du fait que les temps de propagation $tp_1$ à $tp_N$ dans les lignes associées $l_1$ à $l_N$ sont différents.

On sait que le synchronisme est principalement exigé pour limiter les phénomènes de diaphonie et, en particulier, de paradiaphonie. On rappelle que la paradiaphonie est la diaphonie qui se produit entre deux lignes adjacentes transitant des signaux selon des directions opposées. En se référant aux Fig. 2A et 2B, on voit que, selon la direction de transmission aller, tous les émetteurs de la station maître C envoient leurs paquets de données a simultanément pendant une durée inférieure à la demi-période T/2. Ces émissions ne peuvent pas perturber les réceptions de paquets b, puisque les récepteurs de la station maître ne sont pas actifs durant cette demi-période.

Il en est de même du côté des stations esclaves. L'émission d'un paquet tel que $b_1$ par la station esclave P associée à une ligne L de longueur maximale D (Fig. 2B) ne peut pas perturber la réception d'un paquet tel que $a_1$ par la station esclave associée à une ligne courte l de longueur telle que d < D. L'émission du paquet $b_1$ sur la ligne longue L (Fig. 2B) est déclenchée bien après la réception du paquet $a_1$ dans la station esclave p associée à la ligne courte l (Fig. 2A). Malgré le chevauchement temporel

3

des réception et émission des paquets $a_1$ et $b_1$ par des stations esclaves respectivement associées à des lignes longue et courte, l'énergie perturbatrice provenant de la ligne courte arrive après la réception du paquet $a_1$ dans la station associée à la ligne longue dont le récepteur est alors inactif.

En revanche, l'artère de transmission à l'alternat n'est pas immunisée contre le phénomène de télédiaphonie. La télédiaphonie est la diaphonie qui se produit entre deux lignes convoyant des signaux suivant la même direction.

Toujours en se référant aux Fig. 2A et 2B, du fait du synchronisme des émetteurs de la station maître C, seuls sont à considérer les couples de lignes perturbatrice-perturbée selon la direction de transmission retour. On voit que, par exemple, le paquet $b_1$ émis par la station esclave p associée à une ligne de longueur courte d arrive dans la station maître C en chevauchant temporellement la réception du paquet $b_1$ émis par une station esclave P associée à une ligne L de longueur plus grande $D > d$. Le signal émis par la station esclave P a subi un affaiblissement qui peut être traduit par une diminution du rapport signal à bruit $R_t$. Celui-ci est exprimé par la relation suivante, pour une fréquence f dans la bande de base:

$$R_f (f) = E_t (f) - (\alpha_D (f) - \alpha_d (f))$$

dans laquelle tous les termes sont en décibels, $E_t$ désigne l'écart télédiaphonique et $\alpha_D$ et $\alpha_d$ désignent les affaiblissements (nombres positifs) dus à la ligne longue L et à la ligne courte l. Cet affaiblissement du signal peut être très important. Par exemple, dans le cas d'un couple perturbateur-perturbé tel que $d = 0,60$ km et $D = 4$ km, la différence des affaiblissements $\alpha_d (f) - \alpha_D (f)$ atteint environ 30 dB.

Conformément à l'invention, le dispositif pour combattre l'influence néfaste de la télédiaphonie consiste à égaliser les niveaux relatifs des signaux sur les lignes de l'artère en un point quelconque de celle-ci selon une même direction de transmission.

Cette égalisation de niveaux relatifs doit être réalisée pour les signaux numérique transmis suivant la direction retour à partir du point de regroupement G des lignes de l'artère. Si on désigne par $S_o (f)$ la densité spectrale de puissance relative au signal émis par la station esclave P associée à la ligne longue L. la densité spectrale de puissance $S_G (f)$ de ce signal lorsqu'il atteint le point de regroupement G, c'est-à-dire lorsqu'il devient perturbé par le signal perturbateur émis par la station p associée à la ligne courte, s'exprime par la relation suivante:

$$S_G (f) = S_o (f) - (\alpha_D (f) - \alpha_d (f))$$

Pour que les histogrammes de niveaux relatifs soient identiques sur chaque ligne L, l, il faut que la station p émette un signal de sorte que, au point G, la densité spectrale de puissance du signal sur la ligne l soit égale à l'expression précédente. Si on considère que la station p est pratiquement devant le point G, celle-ci doit émettre un signal de densité spectrale de puissance $s_o (f)$ telle que:

$$s_o (f) = S_o (f) - (\alpha_D (f) - \alpha_d (f))$$

Ceci est obtenu en filtrant le signal initial $S_o (f)$ dans la station p par un filtre qui an un gain de transfert égal à $\alpha_d (f) - \alpha_D (f)$. Si on suppose que les lignes ont des mêmes caractéristiques de transmission, c'est-à-dire ont des sections égales en un même matériau conducteur, la fonction de transfert précédente correspond à l'atténuation d'un tronçon de ligne de longueur $D - d$.

La contribution de ce filtrage peut être généralisée à une artzère de transmission numérique comportant une pluralité de lignes $l_1$ à $l_N$ quin sont regoupées dans un câble à partir d'un point G, comme montré à Fig. 3. Chaque ligne $l_n$, n variant de 1 à N, possède en amont du point G, selon la direction de transmission considérée de la station p vers l'artère, un tronçon de ligne de longueur $x_n$. Si X est la plus grande longueur des tronçons $x_1$ à $x_n$ ou si $\alpha_X$ désigne la plus grande atténuation subie par uun signal reçu en G comparativement aux atténuations dues aux tronçons $x_1$ à $x_N$, chaque émetteur d'une station $p_n$ comporte un filtre dont le gain de transfert respectif est égal à $\alpha_{xn} - \alpha_X$, où $\alpha_{xn}$ est l'atténuation due au tronçon de longueur $x_n$ desservi par la station $p_n$. La densité spectrale de puissance du signal au point G sur chaque ligne $l_n$ est alors:

$$S_o + \alpha_{xn} - \alpha_X - \alpha_{xn} = S_o - \alpha_X$$

Pour une ligne de tronçon maximal X, la station associée P, telle que $p_1$ sur la Fig. 3 ne comporte pas de filtre.

On notera que chaque station $p_n$ peut être un répéteur d'une ligne de grande longueur. Dans ce cas, le régénérateur associé au sens de transmission considérée $p_n$ vers G, comporte en sortie un filtre de fonction transfert égale à $\alpha_{xn} - \alpha_X$ qui convertit le signal régénéré $S_o$ en un signal $S_o + \alpha_{xn} - \alpha_X$.

La conception et le calcul d'un tel filtre sont réalisés d'une manière analogue à ceux du filtre d'égalisation qui est inséré dans le circuit d'égalisation et d'amplification d'un répéteur numérique. Ce filtre est généralement composé d'une ou plusieurs cellules inductives, capacitives et résistives en T ponté qui sont précédées éventuellement d'une ou plusieurs résistive en T.

Selon un aspect de l'invention, le filtre à gain de transfert $\alpha_{xn} - \alpha_X$ ou $\alpha_d - \alpha_D$ est le filtre déjà présent dans la partie réception d'une station esclave $p_n$ du genre connu.

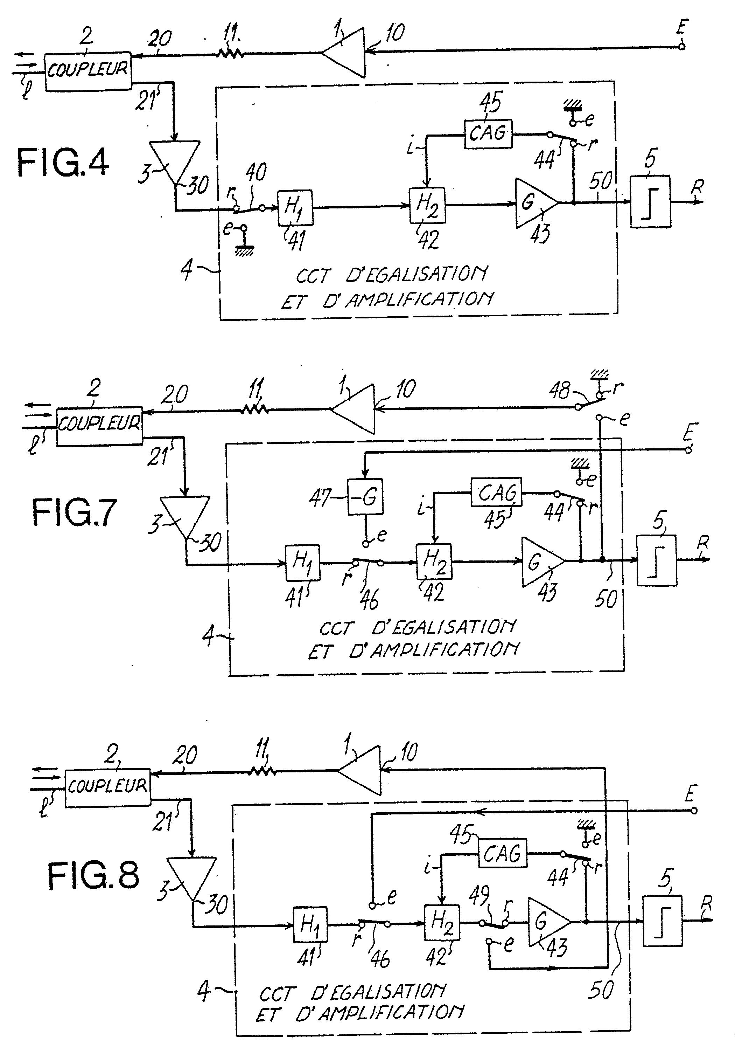

La Fig. 4 représente schématiquement les moyens d'émission et de réception d'un post p de l'art antérieur associé à une ligne à deux fils l.

La voie d'émission comprend, en outre, un amplificateur d'émission 1 dont l'entrée 10 est reliée à une borne d'entrée E qui reçoit le signal numérique à émettre vers la station maître C. La sortie de l'amplificateur 1 est reliée à la voie d'émission 20 d'un coupleur hybride 2, à travers une impédance de terminaison de ligne 11. Le coupleur est du genre transformateur différentiel par exemple et est relié à la ligne l.

La voie de réception du signal transitant à travers la ligne l et émis par la station C comprend un amplificateur de réception 3 dont l'entrée est reliée à la voie de réception 21 du coupleur hybride 2, et un circuit d'égalisation et d'amplification 4 dont la sortie est reliée à l'entrée 50 d'un circuit de remise en forme 5 dont la sortie R restitue les signaux numériques régénérés reçus.

Le circuit d'égalisation et d'amplification 4 comporte en série, entre la sortie 30 de l'amplificateur de réception 3 et l'entrée du circuit de mise en forme 5, un commutateur d'entrée 40, un premier filtre 41, un second filtre 42 et un amplificateur 43 dont le gain G est constant. La boucle de commande de gain automatique du circuit 4 comprend un commutateur 44 qui est interconnecté entre la sortie de l'amplificateur 43 et l'entrée du circuit de commande automatique de gain (CAG) 45 dont la sortie commande le gain de transfert du filtre 42.

En phase d'émission e, lorsqu'un paquet b est émis selon la direction retour par la station p, à travers les éléments 1, 11 et 2, la voie de réception est inactive au moyen des commutateurs 40 et 44 portés au potentiel de référence ou masse (positions des contacts mobiles des commutateurs 40, 44 opposées à celles illustrées à la Fig. 4). En phase de réception r, les commutateurs 40 et 44 sont en positions telles qu'illustrées à la Fig. 4, et permettent l'égalisation du signal numérique reçu.

Pour une ligne l de longueur donnée d, le gain de transfert global du circuit d'égalisation 4 est approximativement $N$ (f) $+ \alpha_d$ (f). En effet, le rôle de l'égalisation est d'une part, de compenser les distorsions qui sont dues à l'acheminement du signal à travers la ligne et qui sont représentées par la fonction de transfert $- \alpha_d$ (f) et, d'autre part, d'introduire un filtrage destiné à maximiser le rapport signal à bruit tout en minimisant les interférences intersymboles au moyen d'un filtre de Nyquist de fonction de transfert $N$ (f).

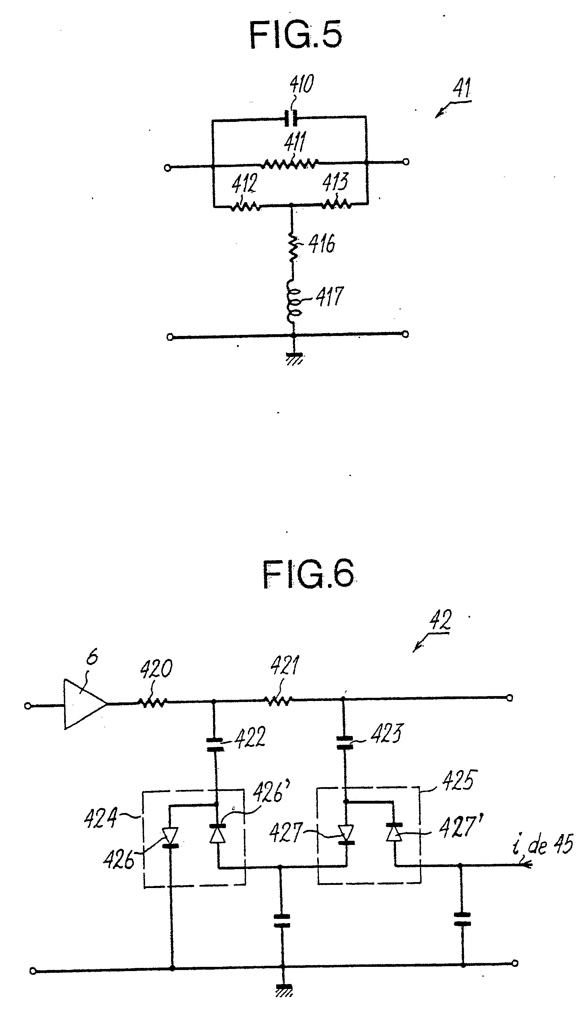

Selon l'exemple de réalisation pratique illustré à la Fig. 5, le filtre 41 présente une fonction de transfert $H_1$ (f) constante obtenue au moyen d'une cellule en T ponté. Cette cellule renferme un condensateur 410 et une résistance 411 en parallèle avec deux résistances identiques 412 et 413 en série. La borne commune aux résistances 412 et 413 est reliée à une résistance 416 en série avec une inductance 417, lesquelles forment la branche verticale du T.

Un filtre 42 est montré à la Fig. 6. Il comprend deux cellules du type passe-bas. Chaque cellule comprend une résistance 420, 421 et un condensateur 422, 423 qui est en série avec une résistance variable 424, 425. Cette résistance variable est constituée par un doublet de diodes tête-bêche 426, 426', respectivement 427, 427', dont les conductances varient en fonction du courant i qui les traverse et qui est délivré par la sortie du circuit de commande automatique de gain 45. Le circuit 45 est constitué classiquement par un détecteur comparateur de niveau. L'entrée du filtre 42 peut être précédée par un adaptateur d'impédance 6.

Les valeurs des éléments 410 à 417 du premier filtre sont choisies pour l'égalisation de la longueur maximale D des lignes. Celles des éléments du second filtre 42 sont déterminées pour compenser l'égalisation de chaque longueur de câble à la longueur maximale D, ce qui correspond à des conductances des éléments varibles 424 et 425 tendant vers l'infini. En d'autres termes, ceci revient à égaliser sélectivement en fréquence les niveaux du signal entrant pour compenser l'effet de la fonction de transfert des lignes.

Ainsi, le filtre variable 42 à fonction de transfert $H_2$ (f) se comporte comme un atténuateur ayant une atténuation variable en fonction d'un paramètre de commande. Les bornes de la plage de variation de ce paramètre correspondent à une atténuation maximale qui est applicable pour une ligne de longueur nulle, et à une atténuation minimale qui est applicarble pour une ligne de longueur maximale D.

Ainsi, pour la configuration de longueur maximale D, les gains de transfert du second filtre 42 et du circuit d'égalisation 4 s'écrivent:

$$20 \log (H_2 (f)) = 0$$
$$N (f) + \alpha_D (f) = 20 \log (H_1 (f)) + O + G$$

d'où l'on déduit le gain de transfert du premier filtre 41

$$A_1 (f) = 20 \log (H_1 (f)) = N (f) + \alpha_D (f) - G.$$

Pour la configuration d'une longueur quelconque d, on a:

$$N (f) + \alpha_d (f) = 20 \log (H_1 (f)) + 20 \log (H_2 (f)) + G.$$

En remplaçant la valeur du gain de transfert 20 log ($H_1$ (f)) dans la relation précédente, il apparaît que le gain de transfert $A_2$ (f) du second filtre 42 s'écrit:

$$A_2 (f) = 20 \log (H_2 (f)) = \alpha_d (f) - \alpha_D (f)$$

et correspond à la fonction de transfert recherchée pour minimiser les effets de télédiaphonie. Conformément à l'invention, les moyens de commutation 40 et 44 d'un circuit d'égalisation connu sont modifés afin que le second filtre 42 soit utilisé dans la station p pendant la phase d'émission.

Les Fig. 7 et 8 montrent deux modes de réalisation des moyens de commutation selon l'invention dans une station p. Dans ces figures, les mêmes numéros de référence désignent les mêmes éléments que ceux montrés à la Fig. 4. En phase de réception r, le signal reçu traverse les mêmes circuits d'amplification et de filtrage dans les Fig. 4, 7 et 8.

Dans la Fig. 7, le commutateur d'entrée 40 est remplacé par un commutateur 46 dont un contact fixe est relié à la sortie du premier filtre 41 et dont le contact mobile est relié à l'entrée du second filtre 42. L'autre contakt fixe du commutateur 46 est relié à l'entrée des signaux d'émission E à travers un atténuateur 47. Cet atténuateur 47 a un coefficient d'atténuation constant égal à — G afin de compenser l'amplification de gain G produite par l'amplificateur 43 en phase d'émission e. La borne de connexion 50 qui est commune à la sortie de l'amplificateur 43, à l'un des contacts fixes du commutateur 44 et à la borne d'entrée du circuit de mise en forme 5, est également reliée à l'un des contacts fixes d'un troisième commutateur 48 dont le contact mobile est relié à l'entrée 10 de l'amplificateur d'émission 1. L'autre contact fixe du commutateur 48 est portée à la masse.

Ainsi, selon la Fig. 7 en phase d'émission e, le signal à émettre transite à partir de la borne E successivement à travers les éléments 47, 46, 42, 43, 48, 1, 11 et 2. En phase de réception r, le commutateur 48 applique le potentiel de référence à l'entrée 10 de l'amplificateur d'émission 1, lequel est déconnecté de la sortie du circuit d'égalisation 4, tandis que le commutateur 46 relie les filtfes 41, 42 et déconnecte la sortie de l'atténuateur 47 et l'entrée du filtre 42.

Dans la Fig. 8, comparativement à la Fig. 7, l'atténuateur 47 et le commutateur 48 sont supprimés. Le commutateur 48 est remplacé par un commutateur 49. En phase de réception r, le contact mobile du commutateur 49 relie la sortie du filtre 42 à l'entrée de l'amplificateur 43, tandis que le commutateur 46 relie la sortie du filtre 41 à l'entrée du filtre 42. En phase d'émission e, le commutateur 49 relie la sortie du filtre 42 directement à l'entrée 10 de l'amplificateur d'émission 1 tandis que le commutateur 46 relie directement la borne E à l'entrée du filtre 42. Ainsi, en phase d'émission e, le signal numérique à transmettre travere à partir de la borne E les éléments successifs 46, 42, 49, 1, 11 et 2.

## Revendications

1. Dispositif pour minimiser la télédiaphonie entre des lignes de transmission numérique introduit dans une station terminale ou intermédiaire à transmission numérique à l'alternat (p) reliée à une extrémité du tronçon d'une ligne (l) dont l'autre extrémité est un point de regroupement (G) desdites lignes ($l_1$ à $l_N$) et qui produit une atténuation ($\alpha_{xn}$) inférieure à atténuation maximale ($\alpha_X$), ledit dispositif comprenant dans la voie de réception de la station des moyens d'égalisation (4) comportant, en outre, un filtre (42) ayant un gain de transfert pratiquement égal à la différence de l'atténuation du tronçon et de l'atténuation maximale, caractérisé en ce qu'il comprend des moyens de commutation (46—49) pour introduire en série ledit filtre (42) dans la voie d'émission de la station pendant chaque phase d'émission (e) du cycle de transmission à l'alternat dans la station (p).

2. Dispositif conforme à la revendication 1, dans lequel les moyens d'égalisation (4) comprennent un amplificateur à gain constant G (43) relié à la sortie dudit filtre (42), caractérisé en ce que les moyens de commutation (Fig. 7) comprennent des premiers moyens de commutation (46) à l'entrée du filtre (42) et des seconds moyens de commutation (48) à la sortie de l'amplificateur (43) qui, pendant la phase d'émission (e), insèrent en série dans la voie d'émission un atténuateur de coefficient d'atténuation — G (47), ledit filtre (42) et l'amplificateur (43) et ouvrent la voie de réception et qui, pendant la phase de réception (r) du cycle de transmission à l'alternat dans la station (p), insèrent en série dans la voie de réception le filtre (42) et l'amplificateur (43) et ouvrent la voie d'émission.

3. Dispositif conforme à la revendication 1, caractérisé en ce que les moyens de commutation (Fig. 8) comprennent des premiers moyens de commutation (46) à l'entrée du filtre (42) et des seconds moyens de commutation (49) à la sortie du filtre (42), qui, pendant la phase d'émission (e), insèrent en série le filtre dans la voie d'émission et ouvrent la voie de réception et qui, pendant la phase de réception (r) du cycle de transmission à l'alternat dans la station (p), insèrent en série le filtre dans la voie de réception et ouvrent la voie d'émission.

## Patentansprüche

1. Einrichtung zum Minimieren des Fernnebensprechens zwischen Leitungen mit digitaler Halb-Duplex-Übertragung, eingefügt in eine Endstation (p) oder Zwischenstation der Übertragungsstrecke, wobei die Station (p) mit einem Ende eines Leitungsabschnittes (l) verbunden ist, dessen anderes Ende eine Zusammenfassungsstelle (G) der Leitungen ($l_1 - l_N$) ist, und die Einrichtung eine Dämpfung ($\alpha_{xn}$) bewirkt, die kleiner ist als eine maximale Dämpfung ($\alpha_X$), und auf dem Empfangskanal der Station eine Ausgleichsschaltung (4) aufweist, die unter anderem ein Filter (42) mit einem Übertragungsgewinn enthält, die praktisch gleich der Differenz zwischen der Leitungsdämpfung und der Maximaldämpfung ist, dadurch gekennzeichnet, daß sie eine Schaltvorrichtung (46—49) zum Einfügen des Filters (42) in Reihe in den Sendekanal der Station (p) während jeder Sendephase (e) des Halb-Duplex-Übertragungszyklus aufweist.

2. Einrichtung nach Anspruch 1, bei welcher die Ausgleichsschaltung (4) einen Verstärker (43) mit konstantem Verstärkungsgrad G aufweist, der mit dem Ausgang des Filters (42) verbunden ist, dadurch gekennzeichnet, daß die Schaltvorrichtung (Fig. 7) einen ersten Schalter (46) am Eingang des Filters (42) und einen zweiten Schalter (48) am Ausgang des Verstärkers (43) aufweist, die während der Sendephase (e) ein Dämpfungsglied (47) mit einem Dämpfungskoeffizienten −G in Reihe mit dem Filter (42) und dem Verstärker (43) in den Sendekanal schalten und den Empfangskanal öffnen, und die während der Empfangsphase (r) des Halb-Duplex-Übertragungszyklus in der Station (p) das Filter (42) und den Verstärker (43) in Reihe in den Empfangskanal legen und den Sendekanal öffnen.

3. Einrichtung nach Anspruch 1, dadurch gekennzeichnet, daß die Schaltvorrichtung (Fig. 8) einen ersten Schalter (46) am Eingang des Filters (42) und einen zweiten Schalter (49) am Ausgang des Filters (42) aufweist, die während der Sendephase (e) das Filter in Reihe in den Sendekanal schalten und den Empfangskanal öffnen, und die während der Empfangsphase (r) des Halb-Duplex-Übertragungszyklus in der Station (p) das Filter in Reihe in den Empfangskanal schalten und den Sendekanal öffnen.


**Claims**

1. Device for minimizing far-end crosstalk between digital transmission lines, included in a half-duplex digital transmission terminal or intermediate station (p) linked to one end of the section of a line (l) whose other end is a grouping point (G) for said lines ($l_1$ to $l_N$) and which produces an attenuation ($\alpha_{xn}$) less than a maximum attenuation ($\alpha_X$), said device comprising equalizing means (4) included in the receiving channel of the station further including a filter (42) having a transfer gain substantially equal to the difference between the attenuation of the section and the maximum attenuation, characterized in that it comprises switching means (46—49) for introducing said filter (42) in series into the transmitting channel of the station during each transmission operation (e) of the half-duplex transmission cycle in the station (p).

2. Device according to claim 1 in which the equalizing means (4) comprises an amplifier (43) having a constant gain G and connected the output of said filter (42), characterized in that the switching means (Fig. 7) comprises first switching means (46) at the input of the filter (42) and second switching means (48) at the output of the amplifier (43), said first and second switching means introducing in series an attenuator (47) having an attenuation factor −G, said filter (42) and the amplifier (43) into the transmitting channel and opening the receiving channel during the transmission operation (e) and introducing in serie the filter (42) and the amplifier (43) into the receiving channel and opening the transmitting channel during the reception operation (r) of the half-duplex transmission cycle in the station (p).

3. Device according to claim 1, characterized in that the switching means (Fig. 8) comprises first switching means (46) at the input of the filter (42) and second switching means (49) at the output of the filter (42), said first and second switching means introducing in series the filter into the transmitting channel and opening the receiving channel during the transmission operation (e) and introducing in series the filter into the receiving channel and opening the transmitting channel during the receiving operation (r) of the half-duplex transmission cycle in the station (p).

0 049·670

FIG.1

FIG.2A

FIG.2B

FIG.3

0 049 670

FIG.4

CCT D'EGALISATION
ET D'AMPLIFICATION

FIG.7

CCT D'EGALISATION
ET D'AMPLIFICATION

FIG.8

CCT D'EGALISATION
ET D'AMPLIFICATION

# FIG.5

# FIG.6